# EUROPÄISCHE PATENTSCHRIFT

(11) **EP 2 383 102 B1**
(45) Veröffentlichungstag und Bekanntmachung des Hinweises auf die Patenterteilung: **18.12.2019**
(21) Anmeldenummer: 11159415.6
(22) Anmeldetag: 23.03.2011
(51) Int. Cl.: B29C 49/78, B29C 49/42, B29C 49/12, B29C 49/06, B29C 49/32

(54) **Streckblasmaschine**
Stretch blowing machine
Machine de soufflage-étirage

(30) Priorität: 27.04.2010 DE 102010028255
(43) Veröffentlichungstag der Anmeldung: 02.11.2011
(60) Teilanmeldung: 17201245.2
(73) Patentinhaber: Krones AG, 93073 Neutraubling (DE)
(72) Erfinder: Finger, Dieter, 93073, Neutraubling (DE); Geltinger, Florian, 93093, Donaustauf (DE); Schneider, Helmut, 93055, Regensburg (DE)
(74) Vertreter: Grünecker Patent- und Rechtsanwälte PartG mbB

(56) Entgegenhaltungen:
- WO-A1-99/48669
- DE-A1-102008 012 757
- US-A- 5 169 705

## Beschreibung

Die Erfindung betrifft ein Verfahren zum Streckblasen von Behältern gemäß Patentanspruch 1 sowie eine Streckblasmaschine gemäß Patentanspruch 5.

Bei der aus DE 10 2008 012 757 A bekannten Streckblasmaschine (Rundläufer) ist jeder Blasstation eine elektronische Steuereinheit im drehenden Teil zugeordnet, die sowohl die Reckstangenbewegung als auch die Blasdruck- und Ventilsteuerung steuert, um die Steuerung für den Produktionsablauf bei einem Produktwechsel schnell anpassen zu können. Die Steuereinheiten im drehenden Teil sind über ein Bussystem miteinander verknüpft und an eine übergeordnete Steuervorrichtung außerhalb des drehenden Teils angeschlossen. Jede Blasstation kann einen Zeitgeber aufweisen, um winkelunabhängig zu steuern. Die Positionen, die die Reckstange im Produktionsablauf durchläuft, können für verschiedene Behältersorten in Rezepten gespeichert sein. Die Reckgeschwindigkeit ist unabhängig von der Produktionsgeschwindigkeit frei parametrierbar. Jede Steuereinheit kann einen Servofrequenzumrichter aufweisen, und steuert nicht nur das elektrische Recken, sondern im Idealfall alle Funktionen der Blasstation. Ein Arbeitstakt wird durch ein Startsignal initiiert und läuft dann zeitgesteuert ab. In jeder Steuereinheit wird sozusagen ein Computerprogramm abgearbeitet. In der Steuereinheit kann ein zeitabhängiger Reckverlauf hinterlegt sein. Der elektrische Servomotor für die Reckstangensteuerung ist ein drehender Frequenzumrichtermotor, wobei die Frequenzumrichtung auch die Ansteuerung der Ventile übernehmen kann. Der elektrische Servomotor treibt einen die Reckstange tragenden Reckschlitten über ein Band. Die Betriebsmedienversorgung des drehenden Teils erfolgt über wenigstens eine Drehdurchführung zwischen dem drehenden und dem feststehenden Teil.

Aus WO 99/48669 A1 ist eine Streckblasmaschine bekannt, deren Blasstationen stationär angeordnet sind. Das Reckstangen-Antriebssystem arbeitet mit einem elektrischen Servomotor, der den die Reckstange tragenden Reckschlitten über einen Zahnriemen antreibt und die Reckstangenbewegung weggesteuert oder kraftgesteuert über die Zeit veranlasst. Jeder Blasstation, die gegebenenfalls mehrere Blasformen umfasst, ist eine elektronische Steuereinheit zugeordnet, die in geschlossenen Regelkreisen die Reckstangenbewegung und die Blasdruckbeaufschlagung steuert. Es können verfahrensgemäß aus unterschiedlichen gespeicherten Kurven des Reckstangenweges über die Zeit, der Reckstangenkraft über die Zeit oder des Blasdüsendrucks über die Zeit passende ausgewählt und abgearbeitet werden. Bei der weggesteuerten Reckstangenbewegung wird maximal eine Geschwindigkeitsänderung vorgenommen. Vor Produktionsbeginn werden erste und zweite Kalibrierungen der später im Produktionsablauf vorzunehmenden Reckstangensteuerung langsam durchgeführt, deren Resultate gespeichert werden. Bei der ersten Kalibrierung wird der Hubweg der Reckstange bis zu einem der Dicke des Flaschenbodens entsprechenden Abstand vom Formhohlraumboden ermittelt, d.h., gegebenenfalls inklusive eines Nachdrückweges für den Preformboden. Bei der zweiten Kalibrierung wird der Hubweg der Reckstange bis zum Preformboden des kalten Preforms abzüglich eines Hubinkrements für z.B. temperaturbedingten Verformungen heißer Preforms ermittelt. Die Regelkreise generieren aufgrund der Kalibrierungen beispielsweise zeitbezogene Hubkurven für den eigentlichen Produktionsablauf. Ähnlich können auch zeitbezogene Druckkurven für eine Vorblas- und eine Endblasphase generiert werden.

Aus DE 10 2007 008 023 A ist ein Reckstangenantrieb mit einem elektrischen Servomotor bekannt. Die Reckstangenbewegung beginnt erst nach der Verriegelung der Blasform.

Aus EP 0 577 384 ist ein Reckstangenantrieb mit einem Servomotor und einer programmierbaren elektronischen Steuervorrichtung bekannt. Mittels des Servomotors kann während des Formschließprozesses die Reckstange schon so weit eingeführt werden, dass sie den Preformboden beinahe berührt.

Aus WO 2008/098565 A ist ein Reckstangenantrieb mit einem elektrischen Servomotor bekannt, der die Reckstange erst nach Verriegelung der Form unter gleichzeitiger Blasdruckunterstützung einfährt. Die Reckkraft wird messtechnisch über den Motorstrom erfasst. Es ist eine auf den Servomotor abgestimmte Steuereinheit vorgesehen, mit der vorbestimmte Profile (Reckweg/Zeit; Reckkraft/Zeit; Reckkraft/Reckweg) gefahren werden.

Weiterer Stand der Technik ist enthalten in US 5 169 705 A.

Der Erfindung liegt die Aufgabe zugrunde, ein Verfahren der eingangs genannten Art und eine zur Durchführung des Verfahrens bestimmte Streckblasmaschine mit der Steuereinheit anzugeben, mit denen Totzeiten im Prozessablauf auf ein Minimum reduzierbar oder vollständig vermeidbar sind.

Die gestellte Aufgabe wird mit den Merkmalen des Patentanspruchs 1 und mit den Merkmalen des Patentanspruchs 6 gelöst.

Verfahrensgemäß wird im Produktionsbetrieb die Totzeit drastisch reduziert oder vollständig eliminiert, da die Bewegung der Reckstange bereits während der Verriegelungsphase der Blasform oder spätestens mit Beginn der Verriegelungsphase gestartet wird, so dass die Reckstange am Preformboden oder ganz knapp, beispielsweise nur etwa 1 mm vor dem Preformboden positioniert ist, oder sogar bereits ein Vorrecken durchführt, ehe die Blasdüse abdichtend auf die Preformmündung aufsetzt. Es ist sogar denkbar, bei dem Verfahren die Reckstange in den Preform bereits vor Beginn der Verriegelungsphase eintauchen zu lassen, beispielsweise ab dem Zeitpunkt, an welchem ein Übergabearm mit dem Preform in den gemeinsamen Wegabschnitt mit der Blasstation bzw. der Blasform eintritt. Dies bedeutet eine weitere Einsparung von Totzeit und ermöglicht es auch, die Bewegungsgeschwindigkeit der Reckstange moderat zu steuern, weil eine relativ lange Zeitspanne nutzbar ist, um das freie Ende der Reckstange bis knapp an den Preformboden oder in Kontakt mit dem Preformboden zu bringen, oder sogar den Preform schon vorzurecken. Diese Steuerung der Reckstangenbewegung wird besonders zweckmäßig mit dem elektrischen Servomotor vorgenommen, der die Positionierung abhängig von der Sorte des Preforms vornimmt. Es kann die Reckstange anfänglich mittels des elektrischen Servomotors sehr schnell beschleunigt und dann auf Reckgeschwindigkeit abgebremst werden, oder zur Annäherung an den Preformboden vorübergehend eine sehr schnelle Bewegungsphase ausführen. Diese individuelle Geschwindigkeitssteuerung der Reckstange bedingt durch die Leistungsfähigkeit des elektrischen Servomotors spart Prozesszeit ein und bedeutet dennoch keine Gefährdung des Preforms oder der Blasform. Die Preformlänge bzw. der Reckstangenhub bis zum oder nahezu zum Kontakt mit dem Preformboden wird aus der Steuereinheit ausgelesen. Das Bewegungsprofil der Reckstangenbewegung lässt sich über den elektrischen Servomotor und die Steuereinheit individuell gestalten. Die kritische Hublänge der Bewegung der Reckstange bzw. die Preformlänge kann über eine Referenzfahrt automatisch ermittelt werden, oder auch manuell beispielsweise über einen Touchscreen, an der Steuereinheit vorgegeben werden, oder über eine dezentrale außenliegende und übergeordnete Steuereinrichtung, beispielsweise innerhalb eines Bussystems an die einzelnen Steuereinheiten übermittelt werden. Die Verminderung oder Eliminierung der Totzeit führt zu deutlich gesteigerten Produktionsraten im Produktionsbetrieb.

Bei einer weiteren bevorzugten Ausführungsform wird während des Reckverlaufs die Reckstange sofort nach Aufschalten des Fertigblasdrucks wieder in die obere Position gefahren. Dies hat den Vorteil, dass der Reckantrieb nur kurzzeitig eine Kraft gegen den vorhandenen Innendruck in der Blasform bzw. der Preform aufbringen muss, was in geringeren Verlustleistungen resultiert und das energetische Gesamtbild verbessert. Es ist aber auch denkbar, die Reckstange erst zu einem späteren Zeitpunkt in die obere Position zu fahren. Zum Beispiel ist es bei Hotfillmaschinen erforderlich, die Innenwand der Flasche über die Reckstange zu kühlen, weshalb diese so lange wie möglich in der unteren Stellung verharren muss.

Bei einer weiteren Ausführungsform erfolgt bei einer Referenzfahrt ein Anfahren einer oder mehrerer Zwischenpositionen zwischen dem oberen und dem unteren Anschlag. Zum Beispiel könnte ab einer Zwischenposition der Blasdüsenschlitten mitgenommen werden. Da dieser Mitnahmepunkt durch Verschleiß oder Fertigungstoleranzen variieren könnte, ermöglicht eine automatische Ermittlung dieser Mitnahmeposition eine zielgenaue und reproduzierbare Mitnahme des Blasdüsenschlittens.

In der Streckblasmaschine kann die Steuereinheit nur zum Steuern der Reckstangenbewegung vorgesehen sein. Zweckmäßig ist die Steuereinheit zusätzlich mit Hard- und Software-Technik ausgestattet, die in der Blasstation auch zum Steuern der Blasdüse und/oder der Ventilsektion, zweckmäßig in Zuordnung zur Reckstangenbewegung oder in Zuordnung der Reckstangenbewegung zur Blasdüsen- oder Ventilsektionssteuerung, nutzbar ist. Dies verringert den Steuerungsaufwand nennenswert.

In Streckblasmaschinen werden üblicherweise elektrische Servomotoren, insbesondere auch für das elektrische Recken, über Frequenzumrichter mit Zwischenkreisen mit der Versorgungsspannung versorgt. Die Zwischenkreisspannung wird konventionell durch Brückengleichrichter erzeugt, die eine Zwischenkreisspannung etwa entsprechend dem 1,4-Fachen der Eingangsspannung aufbringen. Beispielsweise wird bei üblicher Netzspannung von 400 Volt eine Zwischenkreisspannung von etwa 560 Volt erreicht. Ein Nachteil dieses bekannten Systems ist es, dass bei unterschiedlichen Netzspannungen in unterschiedlichen Ländern, z.B. in den USA, unterschiedliche Zwischenkreisspannungen für die elektrischen Servomotoren entstehen, was unter Umständen sogar länderspezifische Motorenauslegungen zur Folge haben kann. Mit diesem Nachteil sind erhebliche Verlustleistungen und unzweckmäßig große Kabelquerschnitte verbunden und können Drehmomenteinbrüche oder Schub- bzw. Zugkraftverluste auftreten. Dieser Nachteil lässt sich dadurch vermeiden, dass der jeweilige Frequenzumrichter, vorzugsweise in einem Zwischenkreis, wenigstens ein geregeltes Hochstell-Schaltnetzteil aufweist, mit dem die Zwischenkreisspannung zur Versorgung des jeweiligen elektrischen Servomotors auf zwischen etwa 600 bis 900 Volt, vorzugsweise zwischen etwa 750 und 800 Volt, angehoben und gehalten wird. Durch die Regelung und das Hochstellen lässt sich die Zwischenkreisspannung unabhängig von der Netzspannung oder Nennspannung halten. Es können länderunabhängig stets dieselben Servomotortypen verwendet werden, die an diese angehobene Zwischenkreisspannung angepasst sind. Dadurch lässt sich der Nennstrom senken, was in niedrigeren Verlustleistungen und günstig kleinen Kabelquerschnitten resultiert. Darüber hinaus lassen sich solche angepassten elektrischen Servomotoren z.B. mit höheren Drehzahlen betreiben und werden Kraft- oder Drehmomenteinbrüche zuverlässig ausgeschlossen. Das Hochstellen der Zwischenkreisspannung ist besonders zweckmäßig im Falle von Linearmotoren als Servomotoren, beispielsweise zur Reckstangenbewegungssteuerung.

Zweckmäßig ist in der Streckblasmaschine zumindest ein Frequenzumrichter des elektrischen Servomotors (eines Linearmotors) vom Servomotor separiert, vorzugsweise mit einem Wärmeeinkopplungen vom Servomotor zum Frequenzumrichter oder umgekehrt ausschließenden Abstand. Der Frequenzumrichter kann sogar an einer mehrere bis alle Frequenzumrichter für die Blasstationen der Reckblasmaschine enthaltenden Zentral-Installationsstelle installiert sein. Beispielsweise werden die Frequenzumrichter in einem, vorzugsweise gekühlten, Schaltschrank zentral untergebracht. Der Schaltschrank kann fremdgekühlt werden, beispielsweise über ein Flüssigkeitskühlsystem, oder mit wenigstens einer sogenannten Cold-Plate, die z.B. von den Frequenzumrichtern generierte Wärme abführt. Dies resultiert in langen störungsfreien Standzeiten der elektrischen bzw. elektronischen Ausstattungen.

Bei einer weiteren zweckmäßigen Ausführungsform wird für den jeweiligen elektrischen Servomotor zweiphasiger oder sogar mehrphasiger Strom verwendet. Daraus resultiert eine höhere nutzbare Leistung, insbesondere im Falle von Linearmotoren.

Bei einer zweckmäßigen Ausführungsform der Streckblasmaschine sind Zwischenkreise von Frequenzumrichtern im drehenden Teil mit Zwischenkreisen von Frequenzumrichtern im stehenden Teil elektrisch gekoppelt, und kann, vorzugsweise im stehenden Teil wenigstens ein Energiespeicher zum Versorgen zumindest der Servomotoren im drehenden Teil bei Netzausfall vorgesehen sein. Der im stehenden Teil vorgesehene Energiespeicher lässt im drehenden Teil einen Energiespeicher einsparen, um z.B. bei einem Netzausfall ein kontrolliertes Rückstellen aller Komponenten vornehmen zu können, und nach Beheben des Netzausfalles wieder unmittelbar weiter produzieren zu können.

Bei einer alternativen Ausführungsform wird im drehenden Teil wenigstens ein Energiespeicher, vorzugsweise eine Schwungscheibe, eine Kondensatorbank oder eine Batterie, oder dgl., platziert, um bei Netzausfall dennoch eine Rückstellung in die erforderlichen Ausgangspositionen durchführen zu können (kontrolliertes Herunterfahren des Systems), so dass bei erneutem Produktionsbeginn keine Schäden auftreten. Der Nachteil der autark betriebenen und gesteuerten elektrischen Servomotoren beispielsweise zur Reckstangenbewegungssteuerung wird somit auf steuerungstechnisch einfache Weise beseitigt.

Bei einer zweckmäßigen Ausführungsform sind Antriebsachsen des stehenden Teiles mit Antriebsachsen, vorzugsweise elektrischer Antriebe, im drehenden Teil elektrisch gekoppelt. Diese Kopplung spart z.B. einen Geber im drehenden Teil ein.

Alternativ kann jedoch im drehenden Teil mindestens ein Geber platziert werden, der zur Steuerung wenigstens eines elektrischen Servomotors abhängig vom Gebersignal nutzbar ist.

Der jeweilige Frequenzumrichter sollte zweckmäßig in STO- und/oder SLS-Technologie ausgeführt sein. Die STO-Technologie (safe torque off) dient zum Personenschutz, während die SLS-Technologie (safe low speed) z.B. zweckmäßig bei einem Formenwechsel nutzbar ist.

Häufig unterliegen elektrische Servoantriebe und angebaute Gebersysteme auch gewissen Streuungen oder Nichtlinearitäten. Zum Beispiel können bei Linearmotoren Geber zum Einsatz kommen, die in die Motorwicklung integriert sind. Diese Geber sind kostengünstig und robust, haben jedoch den Nachteil, dass die Signale zum Erreichen der erforderlichen Genauigkeit linearisiert werden müssen. Da die Ermittlung der motorspezifischen Parameter zur Linearisierung recht aufwändig sein kann, ist es von Vorteil, die Geber bereits herstellerseitig zu vermessen und die Parameter auf dem Typenschild aufzudrucken. Dies erleichtert im Ersatzteilfall den Tausch des Motors. Die Parameter müssen nur noch abgelesen und in die Maschinenbedieneinheit eingegeben werden.

Es ist aber auch denkbar, die Parameter in einem Speicher abzulegen. Die Gebersysteme haben häufig integrierte Mikroprozessoren und Speicher, weshalb es sich anbietet, diese Speicher hierfür mitzubenutzen. Der Speicher könnte vom Servoumrichter ausgelesen werden, um die Parameter automatisch zu übernehmen. Im Ersatzteilfall ist damit kein weiterer Bedieneingriff durch den Instandhalter erforderlich. Bei solchen Speichern spricht man von sogenannten elektronischen Typenschildern.

Genauso gut könnten die Parameter im eingebauten Zustand des Motors selbständig über eine automatische Kalibrierung ermittelt werden, indem die Reckachse über die gesamte Länge verfahren wird. Ebenso lassen sich über solch ein Verfahren die optimalen Regelparameter ermitteln, wobei mehrfache manuelle Iterationsschleifen entfallen. Durch die automatische Vermessung des Motors sowie seiner Regelstrecke neigen Systeme weniger zum Schwingen und können diese besser optimiert werden.

Eine weitere Variante ist die automatische Erkennung des Motortyps. Häufig kommen abhängig von der Maschinengröße unterschiedliche Motortypen zum Einsatz. Deren spezifische Motorparameter könnten ebenfalls aus dem elektronischen Typenschild ausgelesen werden. Dieses "Plug and Play"-Prinzip macht eine manuelle Konfiguration überflüssig.

Bei einer Ausführungsform ist im drehenden Teil der Streckblasmaschine für alle Blasstationen eine Zentralschmiervorrichtung vorgesehen, von der, vorzugsweise überwiegend mechanische und relativ zueinander bewegte Komponenten, dosiert mit Schmierstoff versorgt werden. Dies steigert die Produktionsintervalle zwischen Wartungszyklen und sichert eine gleichmäßige Funktionalität und lange Lebensdauer der mechanischen Ausstattungskomponenten.

Bei einer Ausführungsform der Streckblasmaschine, die nicht unter die Erfindung fällt, ist der als Drehmotor ausgebildete elektrische Servomotor des Reckstangen-Antriebssystems mit einem mit der Reckstange gekoppelten Reckschlitten entweder über eine Gewindespindel, vorzugsweise eine Kugelgewindespindel, oder über eine Seilkette verbunden, um die Drehbewegung des Servomotors in die Linearbewegung der Reckstange umzuwandeln. Dabei werden der Servomotor und die Steuereinheit, vorzugsweise über einen Kühlkörper, auf einem Lagerbock montiert, der wenigstens eine Linearführung für den Reckschlitten aufweist. Die Schraubspindel bzw. Seilkette stellen eine spielfreie Bewegungs- und Kraftübertragung sicher. Diese Komponentengruppe der Blasstation ist komplett vorfertigbar und in ihrer Funktion prüfbar.Dabei weist der Lagerbock ein an einer Längsseite offenes U-Profil auf, in dem innenseitig die Gewindespindel und die Linearführung angeordnet sind. Die Reckstange ist hingegen an der der offenen Längsseite des U-Profils abgewandten Hinterseite angeordnet, was für Reckstangenwechsel wegen besseren Zugangs günstig ist. Der Reckschlitten umfasst das U-Profil außen und greift zur Kopplung mit der Gewindespindel und zur Linearführung ins Innere des U-Profils ein. Die Ausbildung des Lagerbocks ist formstabil. Die Anordnung der einzelnen Komponenten am Lagerbock vermindert exzentrische Kräfte bei der Bewegungssteuerung der Reckstange.

Speziell bei einer Streckblasmaschine eines Rundläufer-Typs kann am Reckschlitten wenigstens eine Mitnehmerstange für einen im Abstand vom Reckschlitten angeordneten, die Blasdüse aufweisenden Blasschlitten angeordnet und über eine in nur einer Bewegungsrichtung des Reckschlittens, vorzugsweise in Rückhubrichtung, wirkende Mitnehmer-Kupplung mit dem Reckschlitten kuppelbar sein. Diese mechanische Kopplung der Blasdüsenbewegung mit der Reckschlittenbewegung ist, wie erwähnt, speziell bei einem Rundläufer-Typ der Streckblasmaschine zweckmäßig, weil bei einem frühzeitigen Rückhub der Reckstange, beispielsweise initiiert vom Druck in der Blasform vor deren Entlüftung, sich der von der Reckstange verschobene Reckschlitten über die Mitnehmerkupplung am Blasschlitten abstützt, wobei der Servoantriebsmotor stromlos geschaltet sein kann oder zweckmäßig sogar in generatorischem Betrieb Energie rückgewinnt.

Bei einer anderen, zweckmäßigen Ausführungsform ist der als Linearmotor ausgebildete Servomotor bezüglich seines Läufers tubular ausgebildet, wobei er einen zur Reckstange koaxialen oder zumindest im Wesentlichen koaxialen Direktantrieb für die Reckstange bildet. Obwohl auch ein flacher Linearmotor nutzbar wäre, bietet ein Linearmotor in tubularer Ausbildung den Vorteil, unkontrollierte Anzugskräfte zu vermeiden. Eine koaxiale Anordnung des Direktantriebes vermeidet Momente auf die Linearführung beispielsweise des Reckschlittens.

Bei einer zweckmäßigen Ausführungsform ist jedoch der Läufer des Linearmotors gegenüber der Reckstange um maximal etwa 100 mm zur Seite versetzt. Diese geringfügige Versetzung bedingt einerseits nur moderate Momente in der Linearführung des Reckschlittens und zwischen dem Läufer und der Reckstange, ist jedoch im Hinblick auf einen raschen und problemlosen Reckstangenwechsel von Vorteil.

Im Übrigen bietet die Verwendung eines Linearmotors, insbesondere in tubularer Bauweise, in Kombination mit der elektronischen Steuereinheit die Möglichkeit, den Weg, die Kraft und den Druck oder nur die Kraft und den Weg der Reckstange zu steuern. Dabei wird zweckmäßig eine Wegsteuerung bis kurz vor dem Ende des Reckprozesses vorgenommen, und dann am Ende des Reckprozesses eine reine Kraftsteuerung, z.B. um das Überdrücken des Behälterbodens exakt zu definieren.

Ein generatorischer Betrieb des elektrischen Servomotors, insbesondere in Form eines Linearmotors, speziell in tubularer Ausbildung, lässt elektrische Energie rückgewinnen, beispielsweise bereits aus der Massenträgheit oder Gewichtskraft des Reckstangen-Antriebssystems und/oder aus der aus dem Druck in der Blasform resultierenden Anhebekraft an der Reckstange. Selbst wenn das Ausmaß der rückgewonnenen elektrischen Energie im Vergleich zum Primärenergieeinsatz klein sein sollte, ergibt sich bei häufig vielen Blasstationen und hoher Produktionsfrequenz dennoch eine nennenswerte insgesamte Energieeinsparung.

Bei einer zweckmäßigen Ausführungsform eines Linearmotors in tubularer Bauweise wird der Läufer gegenüber dem Stator durch Führungshülsen im Stator bzw. an beiden Enden des Stators oder durch wenigstens eine in den Stator durchgehend oder partiell durchgehend integrierte Führungshülse oder sogar durch wenigstens eine außerhalb des Stators angeordnete Führung geführt. Die externe Führung kann beispielsweise zwei beabstandete Führungsglieder an einer Linearführung aufweisen. Diese gezielte Führung des Läufers trägt dazu bei, hohe Kräfte in präzisem Ausmaß zu erzeugen, und Verschleiß zwischen dem Läufer und dem Stator zu vermindern, bzw. parasitäre Reibungsverluste zu minimieren.

Bei einer zweckmäßigen Ausführungsform der Blasmaschine mit einem Linearmotor im Reckstangen-Antriebssystem kann zumindest zum teilweisen Kompensieren von aus dem Blasdruck in der Blasform auf die Reckstange einwirkender Rückstellkräften ein Kraftspeicher, wie eine Feder oder ein Pneumatikzylinder, vorgesehen werden, der dem Linearmotor assistiert bzw. von diesem Kraftspitzen fernhält. Der Kraftspeicher kann, vorzugsweise, sogar aktiv gesteuert werden, abhängig von der jeweiligen Prozessphase und/oder Reckstangenposition. Der Energiespeicher ermöglicht eine kleinere Dimensionierung des Servomotors und egalisiert Rückhubkräfte an der Reckstange durch den Druck im Behälter in der Blasform.

Der Linearmotor, vorzugsweise in tubularer Bauweise, und die Steuereinheit der Blasstation werden zweckmäßig auf einem, vorzugsweise auch die Ventilsektion tragenden, Lagerbock montiert. Zumindest der Linearmotor kann dort über einen Kühlkörper montiert sein, der im Betrieb generierte Wärme abführt. Der Linearmotor kann Kühlrippen oder Luftleitbleche zur Kühlung z.B. durch gezielte Luftströmungen aufweisen. Der Lagerbock weist eine Linearführung für den Reckschlitten auf, an welchem die einen relativ zur Reckstange linear verstellbaren Blasschlitten durchsetzende Reckstange mit dem Läufer, vorzugsweise trennbar, gekuppelt ist. Der Lagerbock mit den daran montierten Komponenten ist vorfertigbar und vor der Endmontage auf Funktion überprüfbar.

Bei einer zweckmäßigen Ausführungsform ist am Lagerbock ein, vorzugsweise einstellbarer und/oder abgefederter, Anschlag für den Reckschlitten angeordnet, der beispielsweise die Endlage des Reckschlittens nach dem Rückhub definiert und/oder zum Referenzieren oder Kalibrieren nutzbar ist.

Bei einer weiteren zweckmäßigen Ausführungsform ebenfalls einer Rundläufer-Streckblasmaschine ist am Blasschlitten im drehbaren Teil ein Hebeglied angeordnet, dem in der Blasstation eine Fangkurve zugeordnet ist, die bei der Drehbewegung des drehbaren Teils mit dem Hebeglied zusammenwirkt. Das Hebeglied ist beispielsweise eine Mitnehmerrolle. Über das Hebeglied lässt sich der Blasschlitten über einen vorbestimmten Hub von der Blasform abheben, um für den Fall eines Fehlers eines Ausblasventils die Ventilsektion zu entlüften.

Bei einer zweckmäßigen Verfahrensvariante wird die Geschwindigkeit der Reckstangenbewegung bei einem Arbeitstakt im Produktionsbetrieb bis in die Position des freien Reckstangenendes beim Formhohlraumboden zumindest zweimal geändert, und zwar ohne Bewegungsumkehr. Die Geschwindigkeit kann dabei wegabhängig und/oder kraftabhängig und/oder zeitabhängig gesteuert werden. Diese mehrfachen Geschwindigkeitsänderungen während des Reckprozesses tragen zur Prozessverbesserung und damit zur Endqualität der Behälter bei.

Bei einer weiteren zweckmäßigen Verfahrensvariante erfolgt die Geschwindigkeitsänderung abhängig vom Blasdruck oder wird die jeweilige Geschwindigkeit abhängig vom Blasdruck eingestellt. Analoges gilt für den Massenstrom der Blasluft (Luftdurchsatz), welcher aus dem Blasdruck und den verwendeten Leitungsquerschnitten resultiert.

Ferner kann es verfahrenstechnisch zweckmäßig sein, die beim Arbeitstakt für den Reckprozess mittels des Linearmotors verschobene Reckstange im Rückhub mit dem Blasdruck in der Blasform zu verschieben, und dabei den Linearmotor entweder stromlos zu schalten oder generatorisch zu betreiben und von der Reckstange antreiben zu lassen.

Ferner kann es zweckmäßig sein, wenn bei dem Verfahren der Blasschlitten zumindest über einen Teil des Rückhubs von der Reckstange bzw. dem Reckschlitten mitgenommen wird, oder der Reckschlitten bei dann stromlos geschaltetem Servomotor während des Rückhubs der Reckstange vom Blasschlitten abgefangen wird, der in der Blasstation zu diesem Zeitpunkt mechanisch verriegelt ist und auch hohe Kräfte problemlos abzutragen vermag.

Die Verwendung der computerisierten elektronischen Steuereinheit in der Blasstation ermöglicht es, direkt an der Steuereinheit oder an einer übergeordneten, externen Steuereinrichtung den Reckweg, die Reckkraft, den Blasdruck, die Reckgeschwindigkeit und dgl. jeweils in einem eigenen Diagramm, z.B. über die Zeit oder den Drehwinkel des drehenden Teiles (beispielsweise in einem Touchscreen) aufzuzeichnen und zu visualisieren, oder der Blaskurvenaufzeichnung zu überlagern. Dies gibt dem Betreiber zusätzliche Informationen zur präzisen Prozesssteuerung und gegebenenfalls zu zweckmäßigen Korrekturmaßnahmen. Es lassen sich auch Hüllkurven oder Grenzwerte für derartige Parameter eingeben, oder über die Steuereinheit Vorschlagswerte mit einem bestimmten Toleranzbereich von beispielsweise ± 10 % automatisch visualisieren. Eine Hüllkurve kann beispielsweise verwendet werden, um einen produzierten Behälter bei Über- oder Unterschreiten der Hüllkurve automatisch auszusondern. Die Wegsteuerung der Reckstange kann ferner an ein Signal gekoppelt werden, beispielsweise an das Signal repräsentativ für eine Ventilschaltung oder einen Druckanstieg. Dies bietet den Vorteil, im Produktionsablauf variierende Ventilschaltzeiten auszugleichen.

Ausführungsformen des Erfindungsgegenstandes werden anhand der Zeichnungen erläutert. Es zeigen:
- Fig. 1: eine Schemadraufsicht einer Streckblasmaschine (Rundläufer),
- Fig. 2: eine Vorderansicht einer Blasstation mit angedeuteten Hauptkomponenten,
- Fig. 3: eine Seitenansicht der Blasstation von Fig. 2,
- Fig. 4: einen Querschnitt der Blasstation der Fig. 2 und 3,
- Fig. 5: eine andere Ausführungsform einer Blasstation mit Hauptkomponenten,
- Fig. 6: eine Frontansicht der Blasstation von Fig. 5,
- Fig. 7: eine Schemadarstellung eines anderen Antriebsprinzips einer Reckstange in einem Reckstangen-Antriebssystem der Blasstation,
- Fig. 8: drei Detailvarianten in schematischer Darstellung eines tubularen Linearmotors, und
- Fig. 9: eine Schemadarstellung von elektrischen Komponenten in der Streckblasmaschine.

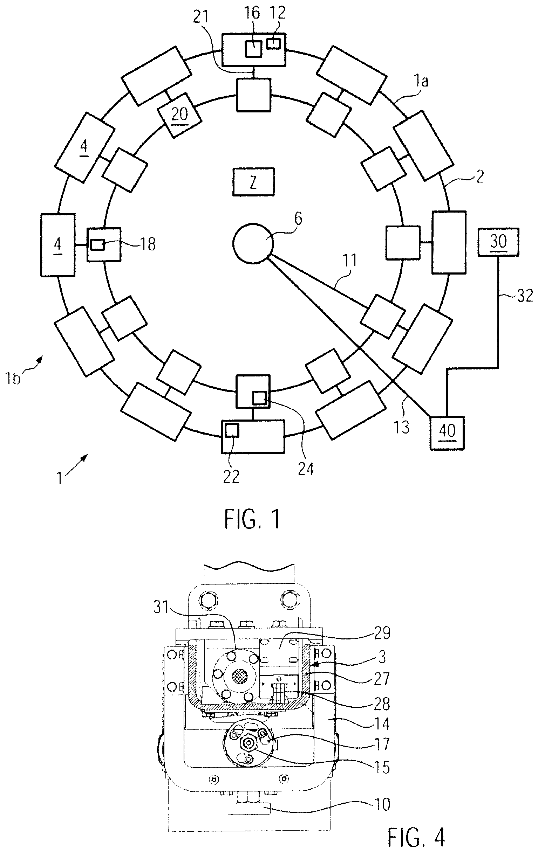

Fig. 1 zeigt schematisch eine Streckblasmaschine 1 zum Streckblasen von Behältern aus Preforms. Die Streckblasmaschine 1 ist ein Rundläufer-Typ mit einem umfangsseitig Blasstationen 4 tragenden Blasrad 2, das einen sich in Relation zu einem stehenden Teil 1b drehenden Teil 1a repräsentiert. Das erfindungsgemäße Konzept ist jedoch ohne Einschränkung auch für Streckblasmaschinen verwendbar, bei denen die Blasstationen stationär angeordnet sind (nicht gezeigt).

Für zumindest eine Blasstation 4 ist in Fig. 1 jeweils eine elektronische Steuereinheit 20 auf dem Blasrad 2 angeordnet. Die Energieversorgung der Steuereinheiten 20 erfolgt z.B. über Verbindungsleitungen 11 und eine Drehdurchführung 6, z.B. eine Schleifringanordnung und/oder Mediendurchführung, im Zentrum des Blasrades 2. Jede Blasstation 4 weist ein Reckstangen-Antriebssystem, hier mit einem elektrischen Servomotor 16 sowie eine Ventilsektion 12 gegebenenfalls mit mehreren Ventilen zum Steuern der Blasluftzufuhr beim Blasprozess auf. Ferner kann bei jeder Blasstation 4 wenigstens ein Sensor 22 vorgesehen sein, der als Geber in Kommunikationsverbindung mit der jeweiligen Steuereinheit 20 stehen kann. Als weitere elektronische Ausstattung ist gegebenenfalls jeweils ein Zeitgeber 24 vorgesehen, der beispielsweise in Abhängigkeit von einem Startsignal einen Arbeitstakt initiieren kann. Weiterhin kann wenigstens ein Sensor 30 als Positionsgeber zum Erfassen einer Winkelposition des Blasrades 2 vorgesehen sein. Eine zentrale Steuereinrichtung 40 kann im stehenden Teil 1b angeordnet sein, die über eine Kommunikationsverbindung 32 beispielsweise mit dem Sensor 30 verbunden ist. Ferner kann eine Kommunikationsverbindung 13, z.B. zur Übertragung eines Startsignals an die jeweilige Steuereinheit 20 vorgesehen werden. In zumindest einer Steuereinheit 20 kann eine Speicher- und/oder Eingabe- und/oder Anzeigesektion 18 vorgesehen sein, um Daten abzulegen, auszulesen und dgl.. Jede Steuereinheit 20 kommuniziert über eine Verbindung 21 mit der Blasstation 4 bzw. zumindest dem Reckstangen-Antriebssystem A oder dem Servomotor 16, der zum elektrischen Recken eingesetzt wird.

Der elektrische Servomotor 16 könnte (nicht gezeigt) mit einem Kraftspeicher oder einem Pneumatikzylinder kombiniert sein, der beim Reckprozess assistiert oder eingreift und gegebenenfalls ebenfalls von der Steuereinheit 20 gesteuert wird.

Alternativ könnte zur Steuerung des Reckprozesses eine Kurvensteuerung kombiniert mit einem pneumatischen Zylinder für jede Blasstation 4 vorgesehen sein (nicht gezeigt), wobei auch hier die Steuerung zumindest des Pneumatikzylinders beim Reckprozess durch die Steuereinheit 20 vorgenommen wird. Die jeweilige Steuereinheit 20 ist somit universell in verschiedenen Reckblasmaschinen verwendbar und mit Hard- und Software-Technik ausgestattet, um wahlweise zumindest eine Blasstation 4 unabhängig von der Art des Reckstangen-Antriebssystems zu steuern. Ferner kann die Steuereinheit 20 so ausgebildet sein, dass sie auch die Druckbeaufschlagung beim Blasprozess und/oder die erforderlichen Verstellungen einer Blasdüse und anderer Komponenten steuert.

Am Blasrad 2 ist ferner schematisch eine Zentralschmiervorrichtung Z angedeutet, die mechanische Komponenten am Blasrad, z.B. dosiert, mit Schmierstoff versorgt.

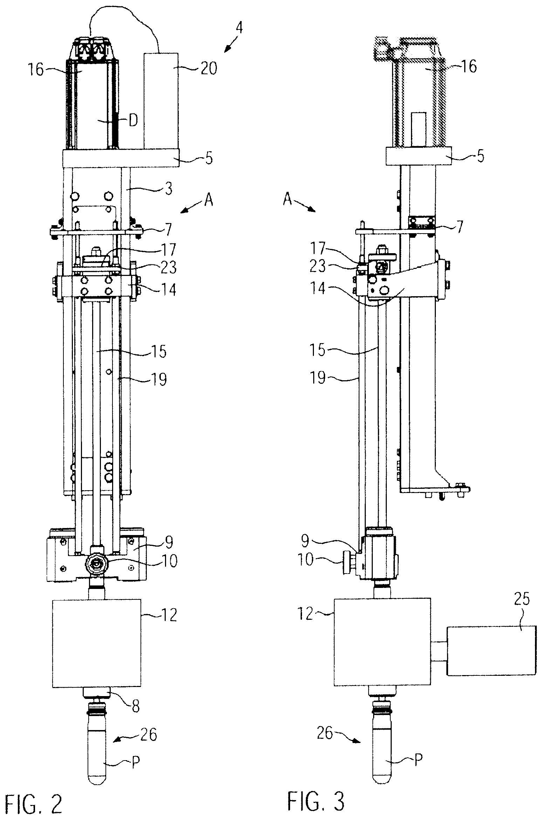

Die Fig. 2, 3 und 4 sind einander zugeordnete Ansichten einer Ausführungsform einer Blasstation 4 mit einem Reckstangen-Antriebssystem A, wobei allerdings nur Hauptkomponenten dargestellt sind.

Ein am Blasrad oberhalb einer geteilten Blasform 26 (nicht im Detail gezeigt) montierter Lagerbock 3 trägt in dieser Ausführungsform der Blasstation 4 für elektrisches Recken den als Drehmotor D ausgebildeten elektrischen Servomotor 16 und separiert von diesem die Steuereinheit 20. Der Servomotor 16 und die Steuereinheit 20 sind beispielsweise über einen Kühlkörper 5 auf dem Kopfende des Lagerbocks 3 installiert, der (Fig. 4) über einen erheblichen Teil seiner Länge als U-Profil 27 ausgebildet ist. Am Lagerbock 3 kann ein Anschlag 7 für einen mit einer Reckstange 15 gekoppelten Reckschlitten 14 vorgesehen sein, der, vorzugsweise, einstellbar und/oder abgefedert ist. Die Reckstange 15 ist über eine lösbare Kopplung 17 im Reckschlitten 14 festgelegt und erstreckt sich parallel zum Lagerbock 3 nach unten bis zur Blasform 26, an deren Position ein Preform P gezeigt ist, aus dem durch Überlagerung eines Reckprozesses und eines Blasprozesses ein Behälter mit der Form des Formhohlraums der Blasform 26 beim Produktionsablauf der Streckblasmaschine 1 hergestellt wird. Die Reckstange 15 durchsetzt einen Blasschlitten 9, mit dem ein Blaskolben bzw. eine Blasdüse 8 verbunden ist, die relativ zu der Blasform anhebbar und bis zur Abdichtung auf der Mündung des Preforms P absenkbar ist. Die Blasform 26 umfasst (nicht gezeigt) beispielsweise zwei Formhälften und einen Formboden, wobei zumindest die Formhälften in Trägern angeordnet sind, die über einen nicht gezeigten Mechanismus bewegt werden können, um die Blasform 26 zu öffnen und zu schließen und in geschlossenem Zustand zu verriegeln. Nach Abschluss der Verriegelungsphase wird im Produktionsablauf die Blasdüse 8 auf die Preformmündung P aufgesetzt, ehe über die Ventilsektion 12 die Druckbeaufschlagung vorgenommen wird, beispielsweise um eine Vorblasphase mit geringerem Druckniveau und anschließend eine Fertigblasphase mit hohem Druckniveau auszuführen, überlagert mit dem Reckprozess durch die Reckstange 15, die in die Blasform eingeschoben wird.

Vom Reckschlitten 14 erstreckt sich mindestens eine Mitnehmerstange 19 zum Blasschlitten 9, wobei die Mitnehmerstange 19 über eine Mitnehmerkupplung 23 mit dem Reckschlitten 14 in dessen Rückhubrichtung der Reckstange 15 kuppelbar ist, beispielsweise um entweder den Blasschlitten 9 anzuheben bzw. den Reckschlitten 14 in Relation zu dem dann mechanisch blockierten Blasschlitten 9 anzuhalten. Der Anschlag 7 ist beispielsweise zum Kalibrieren des Reckstangen-Antriebssystems A nutzbar.

Der Servomotor 16 ist mit dem Reckschlitten 14 über eine Gewindespindel 31 verbunden, die im Inneren des U-Profils 27 angeordnet ist und dort auch abgestützt sein kann. Der Reckschlitten 14 umfasst das U-Profil 27 und greift mit einer Kopplung 29 ins Innere des U-Profils 27 ein, und auch in eine dort angeordnete Linearführung 28. Die Reckstange 15 ist an der der offenen Längsseite des U-Profils 27 abgewandten Hinterseite des Lagerbocks 3 angeordnet und, wie erwähnt, mit dem Reckschlitten 14 über die lösbare Kopplung 17 verbunden, um einen Reckstangenwechsel bequem und rasch ausführen zu können.

Fig. 4 zeigt auch ein Hebeglied 10 (siehe auch die Fig. 2 und 3) am Blasschlitten 9. Dieses Hebeglied ist beispielsweise eine Mitnehmerrolle 10, die mit einer nicht gezeigten Fangkurve zusammenarbeiten kann, um den Blasschlitten 9 anzuheben, beispielsweise um den in der Blasform 26 fertiggestellten Behälter zu entlüften, falls ein Auslassventil zu einem Schalldämpfer 25 an der Ventilsektion 12 nicht ordnungsgemäß funktionieren sollte.

Die Bewegung des Blasschlittens 9 wird durch eine nicht dargestellte Kurvensteuerung gesteuert, oder alternativ durch einen Servomotor und in zeitlicher oder wegabhängiger Zuordnung zu dem Mechanismus, der die Verriegelungsphase der Blasform 26 steuert.

Die Gewindespindel 31, vorzugsweise eine Kugelschraubspindel, die beispielsweise von der in Fig. 1 angedeuteten Zentralschmiervorrichtung Z geschmiert wird, wandelt die Drehbewegung des Servomotors 16 in die Linearbewegung des Reckschlittens 14 um. Die Steuereinheit 20 steuert einen exakt vorbestimmbaren Bewegungsablauf während des Reckprozesses, so dass das freie Ende der auch die Ventilsektion 12 durchsetzenden Reckstange bestimmte Positionen an- und durchfährt, nämlich eine erste Position, bei der das freie Ende der Reckstange 15 dem Preformboden bis auf etwa 1,0 mm angenähert ist oder den Preformboden sogar kontaktiert, oder eine noch tiefere Position, in der der Preform bereits vorgereckt ist, und schließlich eine Endposition nahe dem Formhohlraumboden, ohne den Formhohlraumboden zu berühren. Die Bewegung der Reckstange 15 kann weggesteuert oder kraftgesteuert werden, wobei sogar während eines Arbeitstaktes im Produktionsbetrieb von einer Wegsteuerung auf eine Kraftsteuerung umgeschaltet werden kann, und umgekehrt. Die Geschwindigkeit der Reckstange 15 kann ohne Bewegungsumkehr z.B. mindestens zweimal geändert werden.

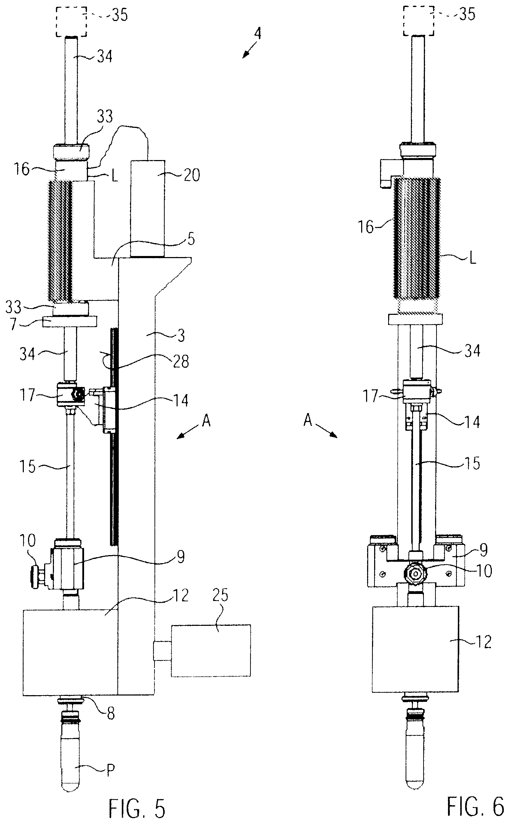

Die Fig. 5 und 6 zeigen eine andere Ausführungsform der Blasstation 4 mit einem Reckstangen-Antriebssystem A zum elektrischen Recken, wobei der Servomotor 16 hier ein Linearmotor L ist, vorzugsweise ein Linearmotor L in tubularer Bauweise. Alternativ könnte auch ein Linearmotor L in anderer Bauform, z.B. flacher Bauform, verwendet werden. Der Linearmotor L bildet mit seinem Läufer 34 einen Direktantrieb der Reckstange 15. Der Linearmotor L ist separiert von der Steuereinheit 20 mit dieser auf dem Kopfende des Lagerbocks 3 installiert, vorzugsweise unter Zwischenschaltung eines Kühlkörpers 5 zumindest für den Linearmotor L. In dieser Ausführungsform des Linearmotors L ist der Läufer 34 in Führungshülsen 33 an beiden Enden des Linearmotors linear geführt und koaxial zur Reckstange 15, wobei der Läufer 34 und die Reckstange 15 im Bereich des Reckschlittens 14 über die trennbare Kopplung 17 miteinander gekoppelt sind. Der Reckschlitten 14 ist an einer Linearführung 28 geführt, die an der der Reckstange 15 zugewandten Seite des Lagerbocks 3 montiert ist. Die Reckstange 15 durchsetzt den Blasschlitten 9, der mit dem Hebeglied 10 ausgestattet sein kann, die Blasdüse 8 und die Ventilsektion 12. Die Ventilsektion 12 ist in dieser Ausführungsform am Lagerbock 3 montiert, wie auch ein Schalldämpfer 25, der einem nicht gezeigten Auslassventil der Ventilsektion 12 zugeordnet ist.

Gestrichelt ist in den Fig. 5 und 6 ein Kraftspeicher 35 angedeutet, z.B. eine Feder oder ein Pneumatikzylinder, der mit dem Läufer 34 in Antriebsverbindung steht und dem Linearmotor L assistiert oder/und bestimmte Kraftverläufe erzeugt oder Kräfte aufnimmt oder kompensiert, die beispielsweise vom Druck im hergestellten Behälter bei noch nicht entlüfteter Blasform die Reckstange 15 in Rückhubrichtung beaufschlagen.

In dieser Ausführungsform kann die Reckstange 15 ihren Rückhub unter Nutzen dieses Drucks in der Blasform ausführen, beispielsweise bis sie durch den Blasschlitten 9 abgefangen wird, oder durch den Anschlag 7 am Lagerbock, oder durch eine Gegenkraft des Kraftspeichers 35 bzw. des Linearmotors. Im Übrigen kann der Linearmotor L während des Rückhubs stromlos geschaltet sein oder im generatorischem Betrieb laufen und Energie rückgewinnen.

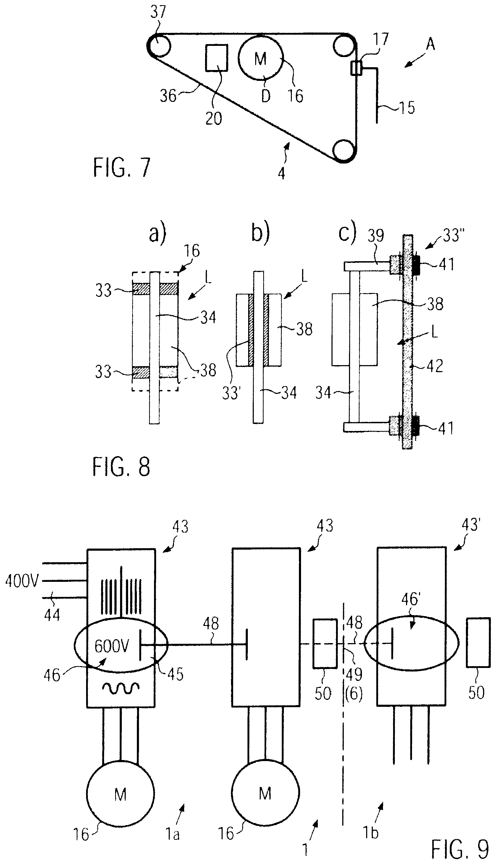

Die tubulare Ausbildung des Linearmotors L als der Servomotor 16 in den Fig. 5 und 6 ist schematisch anhand Fig. 8 gezeigt, die drei Varianten a), b) und c) zeigt.

In der Variante a) in Fig. 8 sind, ähnlich wie in Fig. 5, an beiden Enden eines Stators 38 Führungshülsen 33 angeordnet, die den Läufer 34 zentral im Stator 38 führen. Diese Führungshülsen 33 könnten (gestrichelt angedeutet) auch innen in den Stator 38 integriert sein.

In der Variante b) in Fig. 8 ist in den Stator 38 eine durchgehende Führungshülse 33' integriert, die sich hier über die gesamte Länge des Stators 38 erstreckt und einen geringeren Außendurchmesser hat als der Stator 38. Der Stator 38 ist im Übrigen mit weitgehend kreisringförmigem Querschnitt ausgebildet. Die Führungshülse 33' könnte sich nur über einen Teil der Länge des Stators 38 erstrecken oder in beispielsweise zwei kürzere Führungshülsen unterteilt sein.

In der Variante c) in Fig. 8 ist eine gegenüber dem Stator 38 außenliegende Führung 33" für den Läufer 34 vorgesehen. Der Läufer 34 ist beispielsweise über zwei Halter 39 und Führungshülsen 41 an einer Linearführung 42 geführt. In der Variante c) in Fig. 8 könnte der Läufer 34 auch nur an einem Ende geführt sein.

Wie erwähnt, bildet der Linearmotor L mit seinem Läufer 34 in den Fig. 5 und 6 einen zur Reckstange koaxialen Direktantrieb. Es wäre allerdings möglich (nicht gezeigt), den Läufer 34 gegenüber der Reckstange 15 seitlich zu versetzen, beispielsweise um maximal 100 mm, um günstigere Voraussetzungen für einen Reckstangenwechsel zu bieten.

Fig. 7 verdeutlicht schematisch eine andere Ausführungsform des Reckstangen-Antriebssystems A mit einem Servomotor 16, der als Drehmotor D ausgebildet und von der Steuereinheit 20 gesteuert ist. Die Drehbewegung des Servomotors 16 wird z.B. über eine Seilkette 36, die in einer hier geschlossenen Schlaufe über Umlenkrollen 37 gelegt ist, auf den Reckschlitten 17 und somit auf die Reckstange 15 übertragen.

Der Reckprozess beim elektrischen Recken wird mittels des Servomotors 16 so gesteuert, dass die Reckstange im Produktionsablauf beim Streckblasen eines Behälters aus dem Preform P spätestens mit Beginn der Verriegelungsphase oder während der Verriegelungsphase der Blasform 26 in den Preform bzw. die Blasform 26 eingeschoben wird, gegebenenfalls sogar schon vor dem Start der Verriegelungsphase, wenn sich ein nicht gezeigter Übergabearm mit dem Preform P bei noch geöffneter Blasform 26 auf dem gleichen Weg bewegt wie die Blasform, und zwar zunächst bis etwa 1,0 mm zu dem Preformboden hin oder sogar in Kontakt mit dem Preformboden, ehe die Blasdüse 8 auf die Preformmündung abdichtend aufgesetzt ist und der Vorblasprozess eingeleitet wird. Die Reckstange 15 kann sogar noch weiter eingeschoben werden und bereits mit dem Vorrecken des Preforms P begonnen haben, sobald die Blasdüse auf die Preformmündung aufgesetzt hat. Danach wird die Reckstange 15 gleichzeitig mit der Vorblasphase, in der die Behälterform zu etwa 90 % fertiggeblasen wird, bis nahe zum Formhohlraumboden weiter verschoben, wobei in der anschließenden Fertigblasphase mit noch höherem Blasdruck die Reckstange sogar noch ein Nachdrücken des Behälterbodens ausführen kann. Die Steuerung der Reckstangenbewegung wird von der Steuereinheit 20 entweder weggesteuert oder kraftgesteuert durchgeführt, und gegebenenfalls abhängig von der Blasdrucksteuerung, wobei, wie erwähnt, während eines Arbeitstaktes im Produktionsablauf sogar zwischen Wegsteuerung und Kraftsteuerung umgeschaltet werden kann.

Die korrekten Positionen der Reckstange während des Reckprozesses werden von der Steuereinheit 20 vorgegeben, wie auch die Geschwindigkeit, die zweckmäßig mindestens zweimal während des Reckprozesses geändert wird, und zwar entweder durch einen vorhergehenden Kalibriervorgang zum Beschaffen von Parameterwerten für die Steuereinheit 20 und/oder durch Eingaben von Parametern abhängig von der jeweiligen Preform- und/oder Behältersorte. Beim Kalibrieren kann auch der Anschlag 7 benutzt werden.

Die Energieversorgung des Reckstangen-Antriebssystems A zum elektrischen Recken wird beispielsweise über eine Schleifringanordnung der Drehdurchführung 6 in Fig. 1 vorgenommen, wobei (Fig. 9) zumindest dem Servomotor 16 der Blasstation 4 ein Frequenzumrichter 43, vom Servomotor 16 mit einem Abstand separiert oder sogar in einer zentralen Installationsstelle im Blasrad 2 installiert, zugeordnet ist, von dem der Servomotor 16 über Anschlüsse mit Versorgungsspannung beaufschlagt wird, die in einem Zwischenkreis 45 des Frequenzumrichters 43 generiert und gehalten wird, und zwar unabhängig von der über Anschlüsse 44 zugeführten Nennspannung oder Netzspannung. Im Zwischenkreis 45 ist ein geregeltes Hochstell-Schaltnetzteil 46 vorgesehen, das unabhängig von der Nennspannung die Zwischenkreisspannung auf etwa 600 Volt bis 900 Volt hochstellt und hält. Ein besonders zweckmäßiger Hochstellbereich liegt zwischen etwa 750 Volt und 800 Volt zur Versorgung des Servomotors 16 und zu dessen Geschwindigkeitssteuerung. Die Zwischenkreisspannung kann mittels des geregelten Hochstell-Schaltnetzteils 46 unabhängig von der Nennspannung gehalten werden, so dass ein an diese höhere Zwischenkreisspannung angepasster Servomotor 16 eingesetzt werden kann, unabhängig von eventuell länderspezifisch variierenden Netzspannungen. Die hochgestellte Zwischenkreisspannung resultiert in niedrigeren Verlustleistungen und kleineren Kabelquerschnitten. Ferner lassen sich solche Servomotoren 16 mit höheren Drehzahlen betreiben (als Drehmotor D), ohne dass das Drehmoment einbricht. Dies gilt auch für einen Linearmotor L. Zweckmäßig sind die Frequenzumrichter 43 über Kopplungen 48 im drehenden Teil 1a elektrisch verbunden, so dass alle Servomotoren 16 dieselbe hochgestellte Zwischenkreisspannung nutzen. Ferner ist in Fig. 9 schematisch mit 50 ein Energiespeicher im drehenden Teil 1a angeordnet, beispielsweise eine Schwungscheibe, eine Kondensatorbank, eine Batterie, oder dgl.. Der Energiespeicher 50 dient dazu, bei einem Netzausfall eine korrekte Rückstellung aller beweglichen Komponenten der Blasstationen vorzunehmen, um Schäden beim Neustart abzuwenden.

Ferner ist in Fig. 9 angedeutet, dass die Frequenzumrichter 43 im drehenden Teil 1a über die Drehdurchführung 49 bzw. die Schleifringanordnung 6 über elektrische Kopplungen 48 mit Frequenzumrichtern 43' für andere Servomotoren im stehenden Teil 1b elektrisch gekoppelt sind, wobei im stehenden Teil ein Energiespeicher 50 (anstelle des im drehenden Teil gezeigten Energiespeichers 50) vorgesehen ist, um bei Netzausfall auch die Servomotoren 16 im drehenden Teil 1a" kontrolliert herunterfahren zu können, z.B. auf Drehzahl Null, und um Ausgangspositionen einstellen zu können. Es sind auf diese Weise beispielsweise elektrische Antriebsachsen im drehenden Teil mit elektrischen Antriebsachsen im stehenden Teil gekoppelt.

Häufig unterliegen elektrische Servoantriebe und angebaute Gebersysteme auch gewissen Streuungen oder Nichtlinearitäten. Zum Beispiel können bei Linearmotoren Geber zum Einsatz kommen, die in die Motorwicklung integriert sind. Diese Geber sind kostengünstig und robust, haben jedoch den Nachteil, dass die Signale zum Erreichen der erforderlichen Genauigkeit linearisiert werden müssen. Da die Ermittlung der motorspezifischen Parameter zur Linearisierung recht aufwändig sein kann, ist es von Vorteil, die Geber bereits herstellerseitig zu vermessen und die Parameter auf dem Typenschild aufzudrucken. Dies erleichtert im Ersatzteilfall den Tausch des Motors. Die Parameter müssen nur noch abgelesen und in die Maschinenbedieneinheit eingegeben werden. Es ist aber auch denkbar, die Parameter in einem Speicher abzulegen. Die Gebersysteme haben häufig integrierte Mikroprozessoren und Speicher, weshalb es sich anbietet, diese Speicher hierfür mitzubenutzen. Der Speicher könnte vom Servoumrichter ausgelesen werden, um die Parameter automatisch zu übernehmen. Im Ersatzteilfall ist damit kein weiterer Bedieneingriff durch den Instandhalter erforderlich. Bei solchen Speichern spricht man von sogenannten elektronischen Typenschildern. Genauso gut könnten die Parameter im eingebauten Zustand des Motors selbständig über eine automatische Kalibrierung ermittelt werden, indem die Reckachse über die gesamte Länge verfahren wird. Ebenso lassen sich über solch ein Verfahren die optimalen Regelparameter ermitteln, wobei mehrfache manuelle Iterationsschleifen entfallen. Durch die automatische Vermessung des Motors sowie seiner Regelstrecke neigen Systeme weniger zum Schwingen und können diese besser optimiert werden. Eine weitere Variante ist die automatische Erkennung des Motortyps. Häufig kommen abhängig von der Maschinengröße unterschiedliche Motortypen zum Einsatz. Deren spezifische Motorparameter könnten ebenfalls aus dem elektronischen Typenschild ausgelesen werden. Dieses "Plug and Play"-Prinzip macht eine manuelle Konfiguration überflüssig. Die diesbezüglichen baulichen und funktionellen Merkmale sind in den Figuren nicht hervorgehoben, sind jedoch Teil der Offenbarung.

## Patentansprüche

1. Verfahren zum Streckblasen von Behältern aus Preforms (P) in einer Blasstation (4) einer Streckblasmaschine (1), wobei in der Blasstation (4) mindestens eine geteilte Blasform (26), eine verstellbare Blasdüse (8) mit einer taktabhängig gesteuerten Ventilsektion (12), eine verstellbare Reckstange (15) mit einem taktabhängig gesteuerten Reckstangen-Antriebssystem (A), und eine elektronische Steuereinheit (20) zumindest zum Steuern des Reckstangen-Antriebssystems (A) vorgesehen sind, und bei dem Verfahren bei von der geöffneten Blasform (26) abgehobener Blasdüse (8) und zurückgezogener Reckstange (15) ein Preform (P) in die Blasform eingesetzt, die Blasform (26) geschlossen und verriegelt, die Blasdüse (8) auf den Preform (P) dichtend aufgesetzt und die Reckstange (15) bis zur Annäherung an den und/oder in Kontakt mit dem Preformboden eingeschoben und unter Druckbeaufschlagung des Preforms (P) über die Blasdüse (8) bis nahe zum Boden des Formhohlraums der Blasform (26) verschoben wird, **dadurch gekennzeichnet, dass** im Produktionsablauf eines Behälters die Bewegung der Reckstange (15) mittels eines elektrischen Reckstangen-Servomotors (16) spätestens mit Beginn oder während der Verriegelungsphase der Blasform (26) und/oder vor dem Aufsetzen der Blasdüse (8) auf dem Preform (P) eingeleitet und die Reckstange (15) bis zum Aufsetzen der Blasdüse (8) bis in eine Position verschoben wird, in der das freie Ende der Reckstange (15) entweder ganz knapp an den Preformboden angenähert ist oder den Preformboden kontaktiert oder der Preform (P) bereits vorgereckt ist.

2. Verfahren nach Anspruch 1, **dadurch gekennzeichnet, dass** die Geschwindigkeit der Reckstangenbewegung bei einem Arbeitstakt im Produktionsablauf eines Behälters bis in die Position des freien Reckstangenendes beim Formhohlraumboden, vorzugsweise wegabhängig und/oder kraftabhängig und/oder zeitabhängig, ohne Bewegungsumkehr mindestens zweimal geändert wird.

3. Verfahren nach Anspruch 2, **dadurch gekennzeichnet, dass** die Geschwindigkeit der Reckstangenbewegung abhängig vom Blasdruck oder Massenstrom der Blasluft geändert und/oder eingestellt wird.

4. Verfahren nach Anspruch 1, **dadurch gekennzeichnet, dass** die beim Arbeitstakt mittels des Linearmotors (L) verschobene Reckstange (15) im Rückhub mit dem Blasdruck in der Blasform (26) verschoben wird, und dass der Servomotor (16) beim Rückhub entweder stromlos geschaltet oder generatorisch von der Reckstange angetrieben wird.

5. Streckblasmaschine (1) mit einer elektronischen Steuereinheit eingerichtet zur Steuerung des Reckstangen-Antriebssystems (A) einer verstellbaren Reckstange zum Durchführen des Verfahrens von Anspruch 1 wobei der Frequenzumrichter (43) eines elektrischen Reckstangen-Servomotors (16) in einem Zwischenkreis (45) wenigstens einen geregelten Hochstell-Schaltnetzteil (46) aufweist, mit dem eine auf zwischen etwa 600 bis 900 Volt angehobene Zwischenkreisspannung zur Versorgung des an die angehobene Zwischenkreisspannung angepassten elektrischen Servomotors (16) unabhängig von der auf den Frequenzumrichter aufgebrachten Netzspannung erzeugbar und haltbar ist.

6. Streckblasmaschine nach Anspruch 5, **dadurch gekennzeichnet, dass** Zwischenkreise (45) von Frequenzumrichtern (43) für elektrische Servomotoren (16) in einem drehenden Teil (1a) mit Zwischenkreisen (45') von Frequenzumrichtern (43') für elektrische Servomotoren in einem stehenden Teil (1b) elektrisch gekoppelt sind, und dass im stehenden Teil (1b) wenigstens ein Energiespeicher (50) zum Versorgen zumindest der elektrischen Servomotoren (16) im drehenden Teil (1a), vorzugsweise bei Netzausfall, vorgesehen ist.

7. Streckblasmaschine nach Anspruch 5, **dadurch gekennzeichnet, dass** in einem drehenden Teil (1a) wenigstens ein Energiespeicher (50) zum Versorgen zumindest der elektrischen Servomotoren im drehenden Teil (1a), vorzugsweise bei Netzausfall, vorgesehen ist, vorzugsweise eine Schwungscheibe, eine Kondensatorbank, oder eine Batterie.

8. Streckblasmaschine nach Anspruch 5, **dadurch gekennzeichnet, dass** der als Linearmotor (L) ausgebildete Servomotor (16) des Reckstangen-Antriebssystems bezüglich seines Läufers (34) tubular ausgebildet ist und mit dem Läufer (34) einen koaxialen oder im Wesentlichen koaxialen Direktantrieb der Reckstange (15) bildet, wobei, vorzugsweise, der Läufer (34) gegenüber der Reckstange (15) um maximal etwa 100 mm zur Seite versetzt angeordnet ist.

9. Streckblasmaschine nach Anspruch 8, **dadurch gekennzeichnet, dass** der Läufer (34) gegenüber einem Stator (38) des Linearmotors (L) durch Führungshülsen (33) im Stator (38) bzw. an beiden Enden des Stators (38) oder wenigstens eine in den Stator (38) durchgehend oder partiell durchgehend integrierte Führungshülse (33') oder wenigstens eine außerhalb des Stators (38) angeordnete Führung (33"), vorzugsweise über zwei beabstandete Führungsglieder (41) und eine Linearführung (42), geführt ist.

10. Streckblasmaschine nach Anspruch 8, **dadurch gekennzeichnet, dass** der Läufer (34) zumindest zum teilweisen Kompensieren aus dem Blasdruck in der Blasform (26) auf die Reckstange (15) wirkender Kräfte mit einem Kraftspeicher (35), wie einer Feder oder einem Pneumatikzylinder, gekoppelt ist.

11. Streckblasmaschine nach Anspruch 8, **dadurch gekennzeichnet, dass** der Linearmotor (L) und eine Steuereinheit (20) auf einem, vorzugsweise auch eine Ventilsektion (12) tragenden, Lagerbock (3), vorzugsweise über einen Kühlkörper (5), montiert sind, und dass der Lagerbock (3) eine Linearführung (28) für einen Reckschlitten (14) aufweist, an welchem die einen relativ zur Reckstange (15) linear verstellbaren Blasschlitten (9) durchsetzende Reckstange (15) mit dem Läufer (34), vorzugsweise trennbar, gekuppelt ist.

## Claims

1. Method of stretch blow molding containers from preforms (P) in a blow molding station (4) of a stretch-blow molding machine (1), wherein in the blow molding station (4) at least one split blow mold (26), an adjustable blow nozzle (8) with a cycle-controlled valve section (12), an adjustable stretching rod (15) with a cycle-controlled stretching rod drive system (A), and an electronic control unit (20) at least for controlling the stretching rod drive system (A) are provided, and wherein in the method, when the blow nozzle (8) is lifted from the opened blow mold (26) and the stretching rod (15) is retracted, a preform (P) is inserted into the blow mold, the blow mold (26) is closed and locked, the blow nozzle (8) is placed onto the preform (P) in a sealing manner, and the stretching rod (15) is inserted until it approaches and/or contacts a preform bottom and is displaced, under pressure application of the preform (P) via the blow nozzle (8), close to the bottom of the mold cavity of the blow mold (26), **characterized in that** in the production process of a container, the movement of the stretching rod (15) is initiated by means of an electric stretching rod servomotor (16) at the latest with the beginning of or during the locking phase of the blow mold (26) and/or before the blow nozzle (8) is placed onto the preform (P) and the stretching rod (15) is displaced into a position in which the free end of the stretching rod (15) either very closely approaches the preform bottom or contacts the preform bottom, or the preform (P) is already prestretched.

2. Method according to claim 1, **characterized in that** the speed of the stretching rod movement in a cycle in the production process of a container to the position of the free stretching rod end at the mold cavity bottom is changed at least twice without return movement, preferably path-depending and/or force-depending and/or time-depending.

3. Method according to claim 2, **characterized in that** the speed of the stretching rod movement is changed and/or adjusted depending on the blow pressure or the mass flow rate of the blow air.

4. Method according to claim 1, **characterized in that** the stretching rod (15) displaced in the process cycle by means of a linear motor (L) is displaced in the return stroke by the blow pressure in the blow mold (26), and that the servomotor (16) in the return stroke is either deenergized or driven by the stretching rod as a generator.

5. Stretch-blow molding machine (1) with an electronic control unit (20) adapted for controlling the stretching rod drive system (A) of an adjustable stretching rod (15) for executing the method of claim 1, wherein the frequency converter (43) of an electric stretching rod servomotor (16) comprises in an intermediate circuit (45) at least one controlled set-up switched-mode power supply (46) by means of which an intermediate circuit voltage set up to between about 600 to 900 Volt for supplying the electric servomotor (16) adapted to the set-up intermediate circuit voltage can be generated and maintained independent of the mains voltage applied to the frequency converter.

6. Stretch-blow molding machine according to claim 5, **characterized in that** intermediate circuits (45) of frequency converters (43) for electric servomotors (16) in a rotating part (1a) are electrically coupled with intermediate circuits (45') of frequency converters (43') for electric servomotors in a stationary part (1b), and that at least one energy storage (50) for supplying at least the electric servomotors (16) in the rotating part (1a), preferably in case of a power outage, are provided in the stationary part (1b).

7. Stretch-blow molding machine according to claim 5, **characterized in that** at least one energy storage (50) for supplying at least the electric servomotors in the rotating part (1a), preferably in case of a power outage, are provided in the rotating part (1a), preferably a flywheel, a capacitor bank, or a battery.

8. Stretch-blow molding machine according to claim 5, **characterized in that** the electric servomotor (16) of the stretching rod drive system designed as linear motor (L) has a tubular design with respect to its rotor (34) and forms with the rotor (34) a coaxial or essentially coaxial direct drive of the stretching rod (15), wherein the rotor (34) of the linear motor (L) is arranged with respect to the stretching rod (15) laterally offset by maximally about 100 mm.

9. Stretch-blow molding machine according to claim 8, **characterized in that** the rotor (34) is guided with respect to a stator (38) of the linear motor (L) by guide rings (33) in the stator (38) or at both ends of the stator (38), or by at least one guide sleeve (33') continuously or partially continuously integrated in the stator (38), or at least one guidance (33") arranged outside the stator (38), preferably by two spaced apart guide members (41) and a linear guide (42).

10. Stretch-blow molding machine according to claim 8, **characterized in that** the rotor (34) is coupled with an energy storage mechanism (35), such as a spring or a pneumatic cylinder, at least for partially compensating forces acting on the stretching rod (15) from the blow pressure in the blow mold (26).

11. Stretch-blow molding machine according to claim 8, **characterized in that** the linear motor (L) and a control unit (20) are mounted, preferably via a heat sink (5), on a bearing support (3) which preferably also supports a valve section (12), and that the bearing support (3) comprises a linear guide (28) for a stretching slide (14) at which the stretching rod (15), which penetrates the stretching slide (9) being linearly adjustable relative to the stretching rod (15), is coupled with the rotor (34), preferably in a releasable manner.

## Revendications

1. Procédé pour le moulage par étirage-soufflage de contenants à partir de préformes (P) dans un poste de moulage par soufflage (4) d'une machine de moulage par étirage-soufflage (1), le poste de moulage par soufflage (4) comprenant au moins un moule de soufflage (26) subdivisé, une buse de soufflage (8) déplaçable avec une section de vannes (12) commandée en fonction du cycle, une tige d'étirage (15) pouvant être déplacée et présentant un système d'entrainement de tige d'étirage (A) commandé en fonction du cycle, et une unité de commande électronique (20) prévue pour commander au moins le système d'entrainement de tige d'étirage (A), procédé d'après lequel, lorsque la buse de soufflage (8) est soulevée du moule de soufflage (26) et que la tige d'étirage (15) est retirée, on insère une préforme (P) dans le moule de soufflage, on ferme et on verrouille le moule de soufflage (26), on applique la buse de soufflage (8) de manière étanche sur la préforme (P), et on introduit la tige d'étirage (15) jusqu'à son rapprochement du fond de la préforme et/ou jusqu'au contact avec celui-ci, et, tout en soumettant la préforme (P) à une pression par l'intermédiaire de la buse de soufflage (8), on fait coulisser la tige d'étirage jusqu'à proximité du fond de la cavité de moulage du moule de soufflage (26), **caractérisé en ce qu'**au cours du déroulement de production d'un contenant, le mouvement de la tige d'étirage (15) est initié au moyen d'un servomoteur électrique de tige d'étirage (16), au plus tard avec le démarrage de la phase de verrouillage du moule de soufflage (26) ou pendant celle-ci et/ou avant l'application de la buse de soufflage (8) sur la préforme (P), et la tige d'étirage (15) est, jusqu'à l'application de la buse de soufflage (8), déplacée dans une position dans laquelle l'extrémité libre de la tige d'étirage (15) est rapprochée tout près du fond de la préforme, ou entre en contact avec le fond de la préforme, ou dans laquelle la préforme (P) est déjà préétirée.

2. Procédé selon la revendication 1, **caractérisé en ce que** la vitesse du mouvement de déplacement de la tige d'étirage, au cours d'un cycle de travail dans le déroulement de production d'un contenant jusqu'à la position de l'extrémité libre de la tige d'étirage au niveau du fond de la cavité de moulage, est modifiée au moins deux fois sans inversion du mouvement de déplacement, de préférence en fonction du chemin de déplacement et/ou en fonction de la force et/ou en fonction du temps.

3. Procédé selon la revendication 2, **caractérisé en ce que** la vitesse du mouvement de déplacement de la tige d'étirage est modifiée et/ou réglée en fonction de la pression de soufflage ou du débit massique de l'air de soufflage.

4. Procédé selon la revendication 1, **caractérisé en ce que** la tige d'étirage (15) ayant été déplacée en coulissement lors du cycle de travail au moyen du moteur linéaire (L), est déplacée en coulissement, pour la course de retour, avec la pression de soufflage dans le moule de soufflage (26), et **en ce que** le servomoteur (16) est, lors de la course de retour, soit commuté en mode non alimenté en courant, soit entrainé en mode générateur par la tige d'étirage.

5. Machine de moulage par étirage-soufflage (1) comprenant une unité de commande électronique configurée pour assurer la commande du système d'entrainement de tige d'étirage (A) d'une tige d'étirage déplaçable, pour la mise en œuvre du procédé selon la revendication 1, machine dans laquelle le convertisseur de fréquence (43) d'un servomoteur électrique de tige d'étirage (16) présente, dans un circuit intermédiaire (45), au moins une unité d'alimentation secteur à élévation de tension (46), à l'aide de laquelle il est possible de produire et de maintenir une tension de circuit intermédiaire augmentée à environ 600 à 900 Volt pour alimenter le servomoteur électrique (16) adapté à la tension de circuit intermédiaire ayant été augmentée, indépendamment de la tension de secteur appliquée au convertisseur de fréquence.

6. Machine de moulage par étirage-soufflage selon la revendication 5, **caractérisée en ce que** des circuits intermédiaires (45) de convertisseurs de fréquence (43) pour des servomoteurs électriques (16) dans une partie tournante (1a), sont couplés électriquement à des circuits intermédiaires (45') de convertisseurs de fréquence (43') pour servomoteurs électriques dans une partie fixe (1b), et **en ce que** dans la partie fixe (1b) il est prévu au moins un accumulateur d'énergie (50) pour l'alimentation au moins des servomoteurs électriques (16) dans la partie tournante (1a), de préférence en cas de coupure du secteur.

7. Machine de moulage par étirage-soufflage selon la revendication 5, **caractérisée en ce que** dans une partie tournante (1a), il est prévu au moins un accumulateur d'énergie (50), de préférence un volant d'inertie, un groupe de condensateurs ou une batterie, pour alimenter au moins les servomoteurs électriques dans la partie tournante (1a), de préférence en cas de coupure du secteur.

8. Machine de moulage par étirage-soufflage selon la revendication 5, **caractérisée en ce que** le servomoteur (16) du système d'entrainement de tige d'étirage, réalisé en tant que moteur linéaire (L), est d'une configuration tubulaire quant à sa partie mobile (34) et forme avec la partie mobile (34), un entraînement direct, coaxial ou sensiblement coaxial, de la tige d'étirage (15), la partie mobile (34) étant de préférence agencée de manière décalée latéralement, au maximum de 100 mm, par rapport à la tige d'étirage (15).

9. Machine de moulage par étirage-soufflage selon la revendication 8, **caractérisée en ce que** la partie mobile (34) est guidée par rapport à un stator (38) du moteur linéaire (L) par l'intermédiaire de douilles de guidage (33) dans le stator (38), à savoir aux deux extrémités du stator (38), ou bien par l'intermédiaire d'au moins une douille de guidage (33') intégrée au stator (38) de manière traversante ou partiellement traversante, ou bien encore par l'intermédiaire d'au moins un guide (33") agencé à l'extérieur du stator (38), de préférence par l'intermédiaire de deux organes de guidage (41) espacés mutuellement et d'un guide linéaire (42).

10. Machine de moulage par étirage-soufflage selon la revendication 8, **caractérisée en ce que** la partie mobile (34) est couplée à un accumulateur de force (35), comme un ressort ou un vérin pneumatique, en vue de compenser au moins partiellement des forces provenant de la pression de soufflage dans le moule de soufflage (26) et agissant sur la tige d'étirage (15).

11. Machine de moulage par étirage-soufflage selon la revendication 8, **caractérisée en ce que** le moteur linéaire (L) et une unité de commande (20) sont montés, de préférence par l'intermédiaire d'un corps de refroidissement (5), sur une console de support (3) portant de préférence également une section de vannes (12), et **en ce que** la console de support (3) comporte un guide linéaire (28) pour un chariot d'étirage (14), sur lequel la tige d'étirage (15), qui traverse un chariot de soufflage (9) déplaçable linéairement par rapport à la tige d'étirage (15), est couplée, de préférence de manière séparable, à la partie mobile (34).
